# EUROPEAN PATENT APPLICATION

(11) **EP 2 187 572 A1**
(43) Date of publication of application: **19.05.2010**
(21) Application number: 07806495.3
(22) Date of filing: 31.08.2007
(51) Int. Cl.: H04L 12/56

(54) **MEDIA GATEWAY DEVICE**

(71) Applicant: Fujitsu Limited, Kawasaki-shi, Kanagawa 211-8588 (JP)
(72) Inventor: TAKAHASHI, Kiyoto, Kawasaki-shi Kanagawa 211-8588 (JP); OHTSU, Kazuyuki, Kawasaki-shi Kanagawa 211-8588 (JP); AWAGAKUBO, Yasunari, Kawasaki-shi Kanagawa 211-8588 (JP); MIZUTANI, Masayoshi, Kawasaki-shi Kanagawa 211-8588 (JP); MATSUOKA, Haruki, Kawasaki-shi Kanagawa 211-8588 (JP); UCHIYAMA, Seiichiro, Kawasaki-shi Kanagawa 211-8588 (JP)
(74) Representative: HOFFMANN EITLE
(86) International application number: PCT/JP2007/067022
(87) International publication number: WO 2009/028094

(57) **Abstract**

Disclosed is a media gateway device that has plural call control means for performing call control between the Internet and a public network and plural interconnection means for performing line connection and media conversion of user data between the Internet and the public network and interconnects the Internet and the public network, wherein the media gateway device sets specific call control means for performing line connection control of the plural interconnection means and includes plural call control means other than the specific call control means, the plural call control units requesting the specific call control means to perform line connection control of the plural interconnection means, the specific call control means has management data storage means for storing management data for determining which one of the plural interconnection means controls which line of the public network, and each of the plural call control means other than the specific call control means has control request means for requesting the specific call control means to perform the line connection control of the plural interconnection means.

## Description

### FIELD OF THE INVENTION

The present invention is related to media gateway devices and, in particular, to a media gateway device that interconnects the Internet and a public network.

### BACKGROUND ART

When connection is established in a direction in which a call is transmitted from an IP network to a CS network in a media gateway device arranged between the CS network (public network), such as an ATM network and a STM network, and the IP (Internet) network, information for selecting a line used for a user plane (U-Plane) is exchanged between the media gateway device and CS network switching equipment.

If the CS network switching equipment is given a right to select the line at this time, the media gateway device uses the line specified by the CS network switching equipment to establish user-plane line connection.

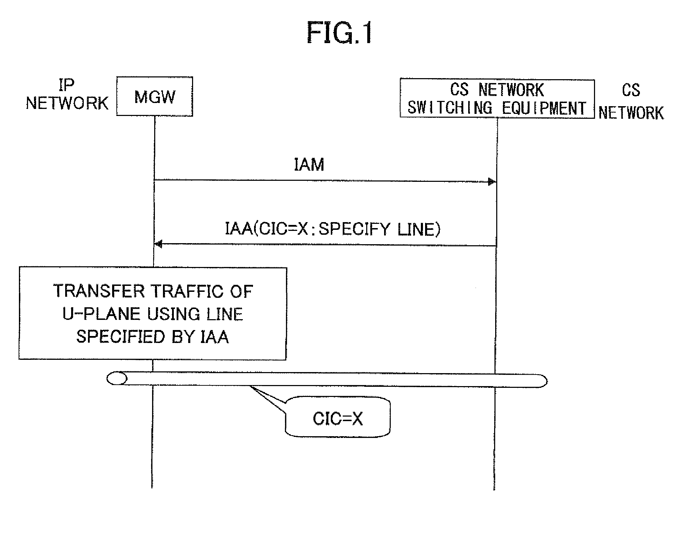

FIG. 1 illustrates the sequence of selecting the line. In FIG. 1, the media gateway device (MGW) transmits a connection request message (IAM) to the CS network switching equipment.

Upon receipt of the message, the CS network switching equipment transmits a response message (IAA) to the media gateway device. When the line is specified by the IAA, the media gateway device selects the line specifying the user plane and transfers traffic.

Note that Patent Document 1 describes gateway devices that are provided at boundaries between plural LANs using an IP as a communication protocol and an ATM communication system and exchange an IP packet with an ATM cell.

Patent Document 1: Japanese Laid-Open Patent Publication No. 2000-253018

### SUMMARY OF THE INVENTION

### PROBLEM TO BE SOLVED BY THE INVENTION

The media gateway device for inter-network connection, which is arranged to establish interconnection between an IP network and a large-scale CS network that handles the large traffic of an existing public network, a mobile communication network, or the like, is demanded to have high processing performance. In order to increase the processing ability of the media gateway device, it is required that the media gateway device be configured to have plural MGCFs (Media Gateway Control Functions) to distribute load, thereby ensuring the processing performance as the whole media gateway device.

As a method for arranging the MGCFs, they are arranged separately for each destination path. If a large amount of traffic is transferred in the same-path, the MGCFs are allocated to distribute load or arranged in combination, thereby increasing the processing ability as the whole media gateway device. In some cases, the MGCFs are arranged to distribute risk in consideration of fault tolerance.

The line used in the user plane (U-Plane) is negotiated to be selected using an ISUP (ISDN User Part) signal when connection is established between the STM network and the IP network. Furthermore, it is negotiated to be selected using a common line signal system such as B-ISUP (Broadband ISDN User part) when connection is established between the ATM network and the IP network.

In the media gateway device having the plural MGCFs described above, however, if a line selection right is given to the side of the CS network, a line under the control of the MGCF having made a connection request may not be selected.

Furthermore, when the media gateway device encounters a line disturbance with the CS network on the other end, line congestion, engagement of its resource, or the like even if it is given the right to select the line, the media gateway device is required to perform detour control to select another line again. However, depending on the use status of the line, no detour line may be available under the control of the MGCF having made the connection request. In this case, the media gateway device is required to select a line other than those capable of being controlled by the MGCF having made the connection request from the CS network again to continue connection control.

Thus, if the media gateway device is requested to select a line other than those capable of being controlled by the MGCS having made the connection request from the CS network or if it encounters a line disturbance with the CS network on the other end, line congestion, the engagement of its resource, or the like as described above, it is required to treat a call as a lost call.

In light of the above deficiencies, the present invention has a general object of providing a media gateway device that can prevent the occurrence of a lost call even if the CS network requests the selection of a line other than those capable of being controlled by the MGCF having made the connection request.

### MEANS FOR SOLVING THE PROBLEM

In order to achieve this object, there is provided a media gateway device that has plural call control means for performing call control between the Internet and a public network and plural interconnection means for performing line connection and media conversion of user data between the Internet and the public network and interconnects the Internet and the public network, wherein the media gateway device sets specific call control means for performing line connection control of the plural interconnection means and includes plural call control means other than the specific call control means, the plural call control units requesting the specific call control means to perform line connection control of the plural interconnection means, the specific call control means has management data storage means for storing management data for determining which one of the plural interconnection means controls which line of the public network, and each of the plural call control means other than the specific call control means has control request means for requesting the specific call control means to perform the line connection control of the plural interconnection means.

### ADVANTAGE OF THE INVENTION

The media gateway device described above can prevent the occurrence of a lost call even if the CS network requests the selection of a line other than those capable of being controlled by the MGCF having made the connection request. In addition, the media gateway device can prevent the occurrence of a lost call by performing detour control in which the MGCF having made the connection request selects a line other than those capable of being controlled by the MGCF itself if the MGCF having made the connection encounters a line disturbance and resource congestion.

### BRIEF DESCRIPTION OF THE DRAWINGS

FIG. 1 illustrates the sequence of selecting a line in a media gateway device;

FIG. 2 illustrates the configuration diagram of the media gateway device according to an embodiment of the present invention;

FIG. 3 illustrates a relationship between VPICs and VXSMs;

FIG. 4 illustrates the operations explanatory diagram of the media gateway device according to a first embodiment of the present invention;

FIG. 5 illustrates distribution data and MGCF management data;

FIG. 6 illustrates the operations sequence of the media gateway device according to the first embodiment of the present invention;

FIG. 7 illustrates the operations explanatory diagram of the media gateway device according to a second embodiment of the present invention;

FIG. 8 illustrates distribution data and MGCF management data;

FIG. 9 illustrates the operations sequence of the media gateway device according to the second embodiment of the present invention;

FIG. 10 illustrates the operations explanatory diagram of the media gateway device according to a third embodiment of the present invention;

FIG. 11 illustrates change destination storage data and line allocation information;

FIG. 12 illustrates the operations sequence of the media gateway device according to a third embodiment of the present invention;

FIG. 13 illustrates a transmitting-side and receiving-side separating model;

FIG. 14 illustrates the transmitting-side and receiving-side separating model;

FIG. 15 illustrates the operations explanatory diagram of the media gateway device according to a fourth embodiment of the present invention; and

FIG. 16 illustrates the operations sequence of the media gateway device according to the fourth embodiment of the present invention.

### DENOTATION OF NUMERICAL SYMBOLS

- 10:: media gateway device
- 11:: IP network
- 13:: CS network switching equipment
- 20:: control plane
- 21,23:: distribution unit
- 22-0 through 22-2:: MGCF
- 24:: SGCS
- 30:: user plane
- 31-1, 31-2:: MGX
- 31-2 through 32-n:: VXSM
- 33:: switch

### BEST MODE FOR CARRYING OUT THE INVENTION

Next, a description is made of embodiments of the present invention with reference to the accompanying drawings.

(Configuration of Media Gateway Device)

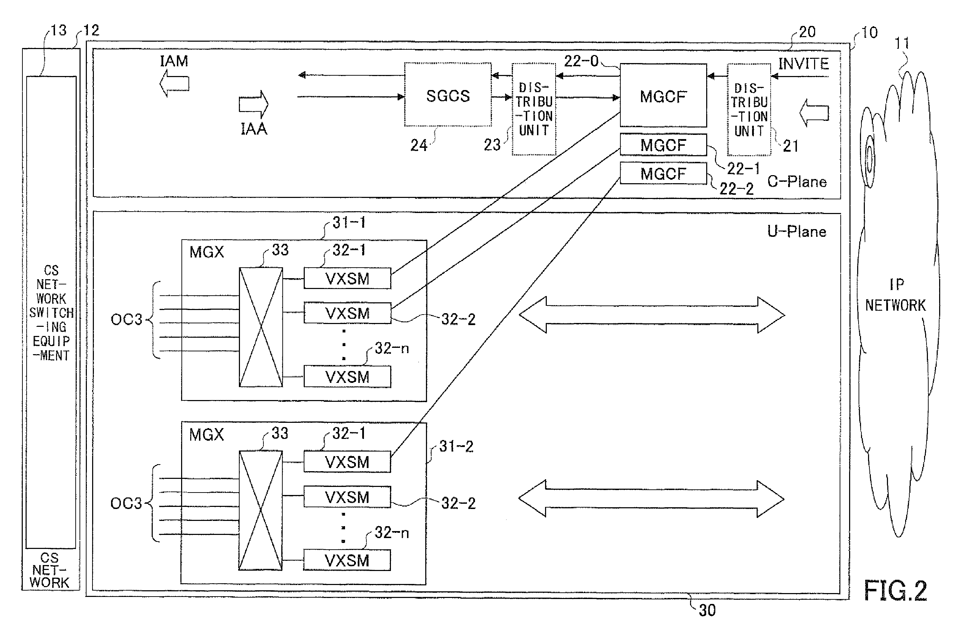

FIG. 2 illustrates the configuration diagram of a media gateway device according to an embodiment of the present invention. In FIG. 2, the media gateway device 10 establishes connection between an IP network 11 and a CS network 12. The CS network 12 is provided with CS network switching equipment 13.

The media gateway device 10 is composed of a control plane (a C-Plane or a signaling gateway) 20 and a user plane (a U-Plane or a media gateway) 30.

In the control plane 20, a distribution unit 21 distributes a signal from the IP network 11 to plural MGCFs (Media Gateway Control Functions) 22-0 through 22-2. At this time, the distribution unit 21 determines the MGCFs by using, for example, an originating station specified by the OPC (Originating Point Code) of the signal from the IP network 11 as a parameter and distributes the signal to the MGCFs. In some cases, the distribution unit 21 determines the MGCFs in order of incoming signals based on a round robin system and distributes the signals to the MGCFs.

Each of the MGCFs 22-0 through 22-2 converts a signal between a SIP (Session Initiation Protocol) or a MEGACO (MEdia GAteway COntrol Protocol) serving as a call control protocol used in the IP network 11 and an ISUP or a B-ISUP serving as a call control protocol used in the CS network 12. Note that the number of the MGCFs is not limited to "three" so long as it is plural. Furthermore, each of the MGCFs 22-0 through 22-2 selects a line used for establishing the connection between the IP network 11 and the CS network 12, conducts a negotiation with the CS network switching equipment 13 to determine the control condition of the user plane 30 such as a media conversion pattern, and makes a control request to plural MGXs (Media Gateways) of the user plane 30 in accordance with the determined control condition.

A distribution unit 23 distributes a signal from the CS network 12 to the plural MGCFs 22-0 through 22-2. A SGCS (Signal Gateway Control Server) 24 relays a control plane signal.

The user plane 30 is provided with the plural MGXs 31-1 and 31-2. The MGXs 31-1 and 31-2 use a line specifying the traffic of the user plane 30 in accordance with the control condition requested by the MGCFs 22-0 through 22-2 and perform specified media conversion to transfer the traffic.

The MGXs 31-1 and 31-2 are provided with plural VXSMs (Voice switch Service Modules) 32-1 through 32-n and a switch 33. Each of the VXSMs performs conversion between an IP (Internet Protocol) used in the IP network 11 and a STM (Synchronous Transfer Mode) and an ATM (Asynchronous Transfer Mode) used in the CS network 12. The switch 33 is used for switching a line between each of the VXSMs and the CS network switching equipment 13.

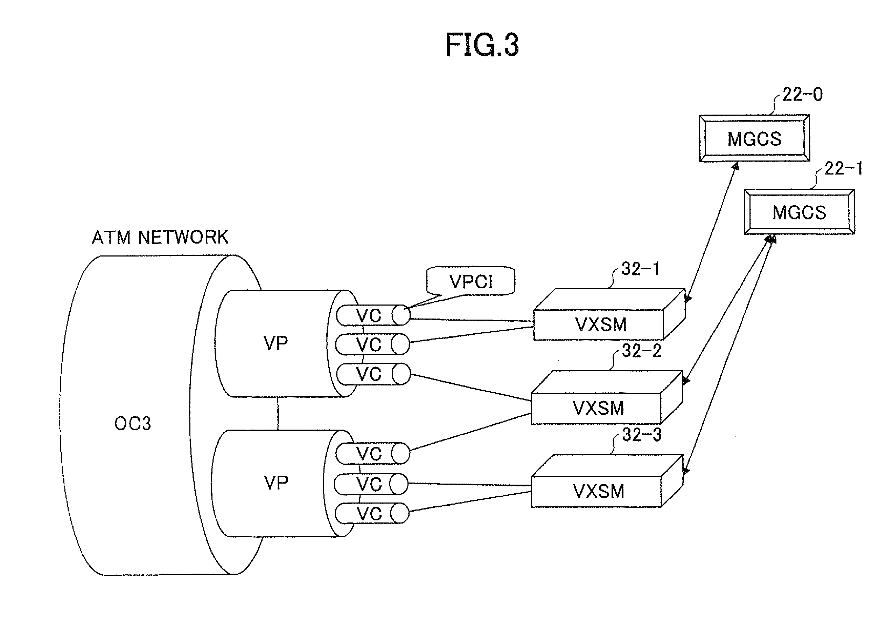

Note that in the description of the following embodiment, an OC3 (Optical Carrier-3) of an ATM network accommodates lines as represented by VPs (Virtual Paths) and VCs (Virtual Channels) as illustrated in FIG. 3. VPCIs (Virtual Path Connection Identifiers) and the VXSMs are linked to each other so that the VXSMs controlling the VPCIs are uniquely determined when the VPICs on the lines of an OC3 interface connected to the ATM network are determined.

(First Embodiment)

In a first embodiment, the master MGCF (e.g., 22-0) is determined in advance, which makes a control request to all the VXSMs 32-1 through 32-n of all the MGXs 31-1 and 31-2 of the user plane 30. The slaves MGCFs 22-1 and 22-2 other than the master MGCF control the control plane 20 and make a line control request to the master MGCF 22-0.

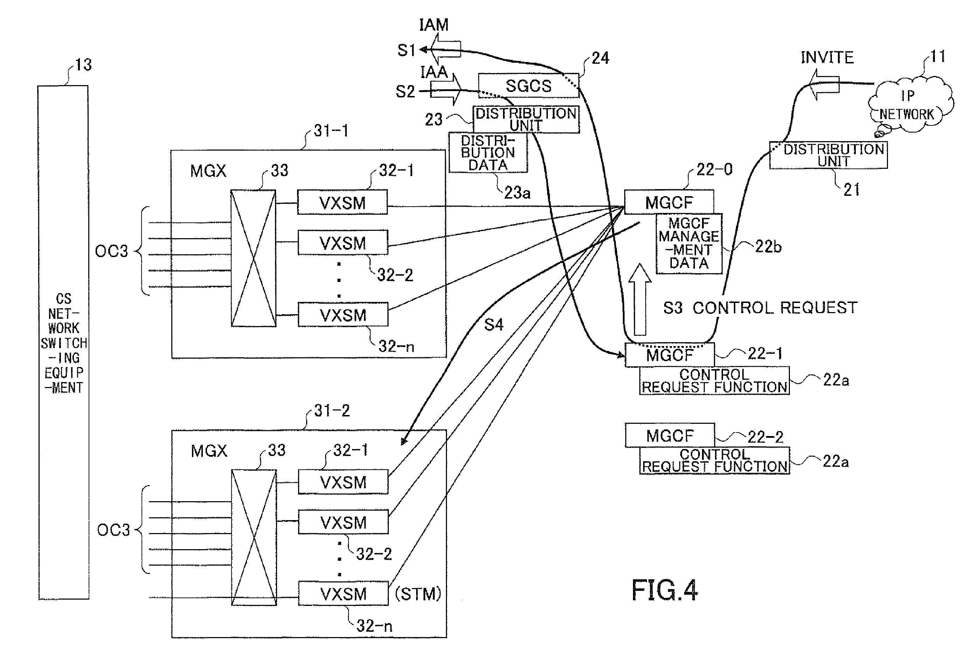

FIG. 4 illustrates the operations explanatory diagram of the media gateway device according to the first embodiment of the present invention.

Step S1: A session start message (INVITE) transmitted from the IP network 11 to the CS network 12 is distributed to the MGCF 22-1 determined based on, for example, the round robin system by the distribution unit 21, converted into a connection request message (IAM) by the MGCF 22-1, and transmitted to the SGCS 24. The above is an example in which the slave MGCF 22-1 is initially selected by the distribution unit 21.

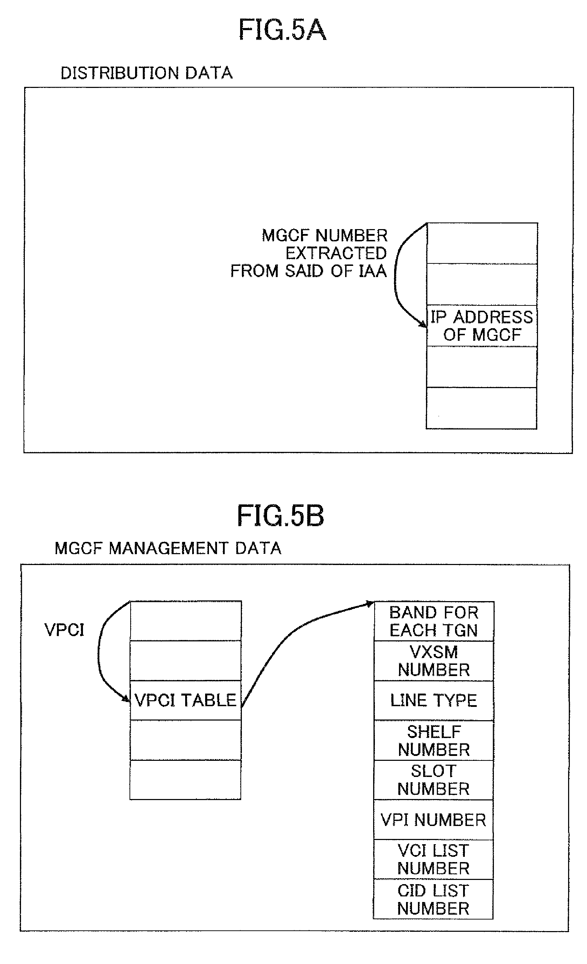

Step S2: A response message (IAA) responding to the IAM and returned from the CS network 12 is routed to the slave MGCF 22-1 serving as a requestor via the SGCS 24 and the distribution unit 23. Note that the distribution unit 23 extracts a MGCF number from the transmission source ID (SAID) included in the response message (IAA) and specifies the IP address of the slave MGCF 22-1 serving as the requestor by referring to distribution data as illustrated in FIG. 5A based on the extracted MGCF number. The distribution data are stored in a distribution data storage unit 23a.

Step S3: The slave MGCF 22-1 having received the response message (IAA) reads line information (OPC, VPCI, and VCI (Virtual Channel Identifier)) extracted from the response message (IAA) and transmits a line acquisition command (Add) to the master MGCF 22-0 to make the line control request. The line control request is executed by the control request function 22a of the slave MGCF 22-1 (22-2).

Step S4: The master MGCF 22-0 transmits the line acquisition command (Add) to the VXSM (e.g., 32-1) of the corresponding MGX (e.g., 31-2) in accordance with the instruction requested in the previous step to perform connection control between the line specified by the CS network 12 and the IP network 11. Note that the master MGCF 22-0 has MGCF management data as illustrated in FIG. 5B in a management data storage unit 22b and obtains a VPCI table by referring to the MGCF management data based on the VPCI contained in the line control request from the slave MGCF 22-1. The VXSM number of the obtained VPCI table indicates the VXSM corresponding to the line specified by the CS network 12.

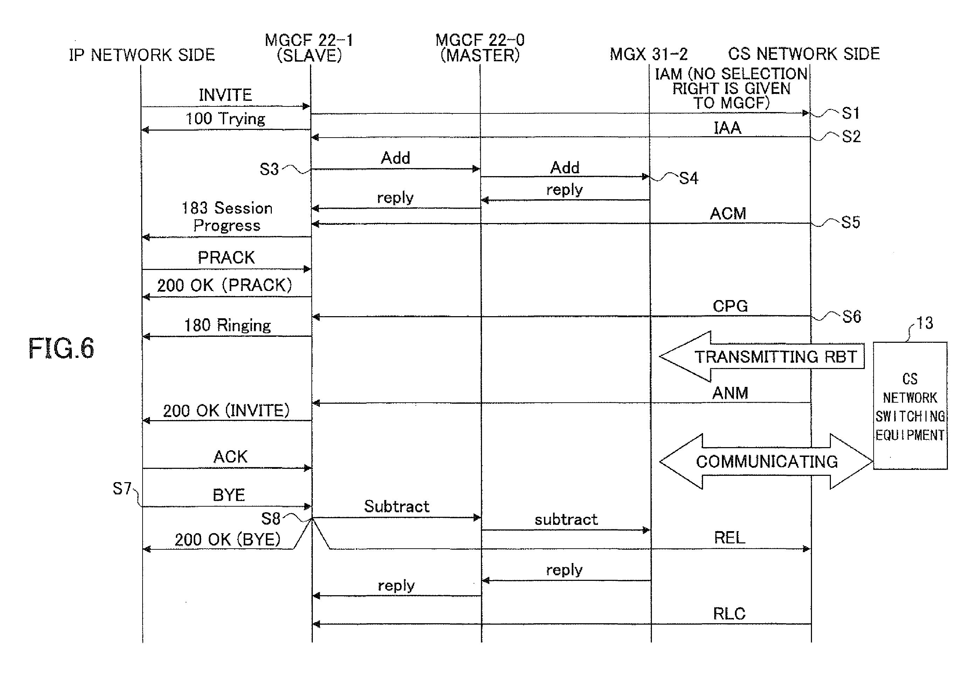

FIG. 6 illustrates the operations sequence of the media gateway device according to the first embodiment of the present invention. Step numbers in FIG. 6 correspond to those in FIG. 4. In FIG. 6, after the connection control in step S4, an address completion message (ACM) is transmitted from the CS network 12 to the slave MGCF 22-1 in step S5, and then a ring back tone (RBT) is transmitted to the slave MGCF 22-1 after the issuance of a call elapse message (CPG) in step S6.

When a session completion request message (BYE) is transmitted from the IP network 11 to the slave MGCF 22-1 in step S7, the slave MGCF 22-1 transmits a path cut command (Subtruct) to the VXSM 32-1 of the MGX 31-2 via the master MGCF 22-0 to cut a path, transmits a release message (REL) to the CS network 12, and reports the success of the request (200 OK) to the IP network 11 in step S8.

Therefore, even if the CS network requests the selection of the line other than those capable of being controlled by the MGCF having made the connection request, the master MGCF 22-0 performs the connection control of the line requested to be selected by the CS network in accordance with the request from the slave MGCF 22-1 having made the connection request. As a result, the occurrence of a lost call can be prevented.

(Second Embodiment)

In a second embodiment, all the MGCFs 22-0 through 22-2 have the same MGCF management data. The MGCF management data contain data for determining which one of the MGCFs is configured to control which line on the side of the CS network. Each of the MGCFs specifies the MGCF that controls the line replied with the response message (IAA) based on the MGCF management data and makes the line control request to the MGCF involved.

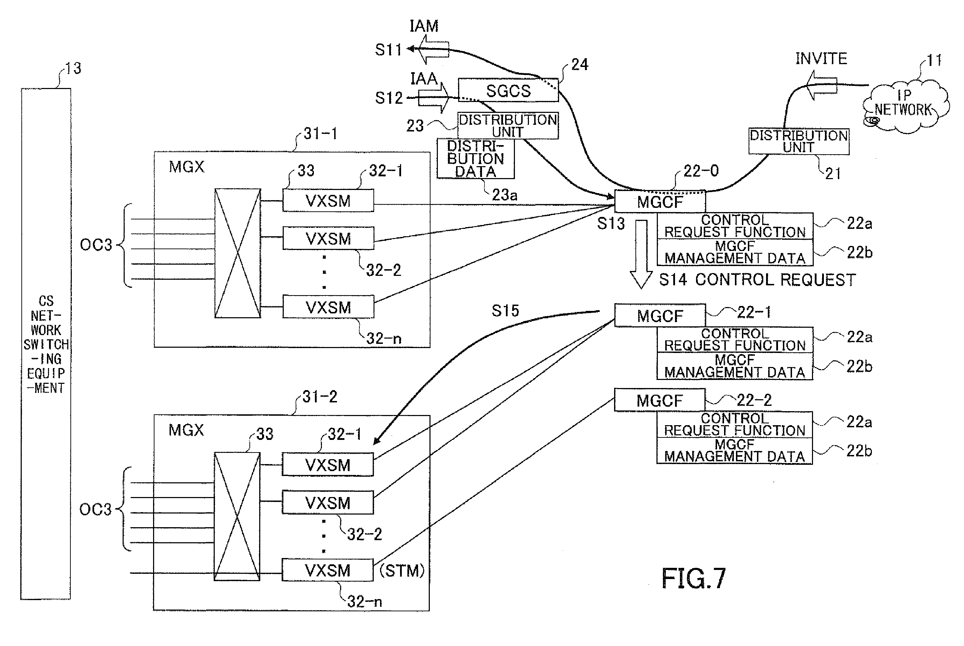

FIG. 7 illustrates the operations explanatory diagram of the media gateway device according to the second embodiment of the present invention.

Step S11: The session start message (INVITE) transmitted from the IP network 11 to the CS network 12 is distributed to the MGCF 22-0 determined based on, for example, the originating station (OPC) contained in the message by the distribution unit 21, converted into the connection request message (IAM) by the MGCF 22-0, and transmitted to the SGCS 24. The above is an example in which the MGCF 22-0 is initially selected by the distribution unit 21.

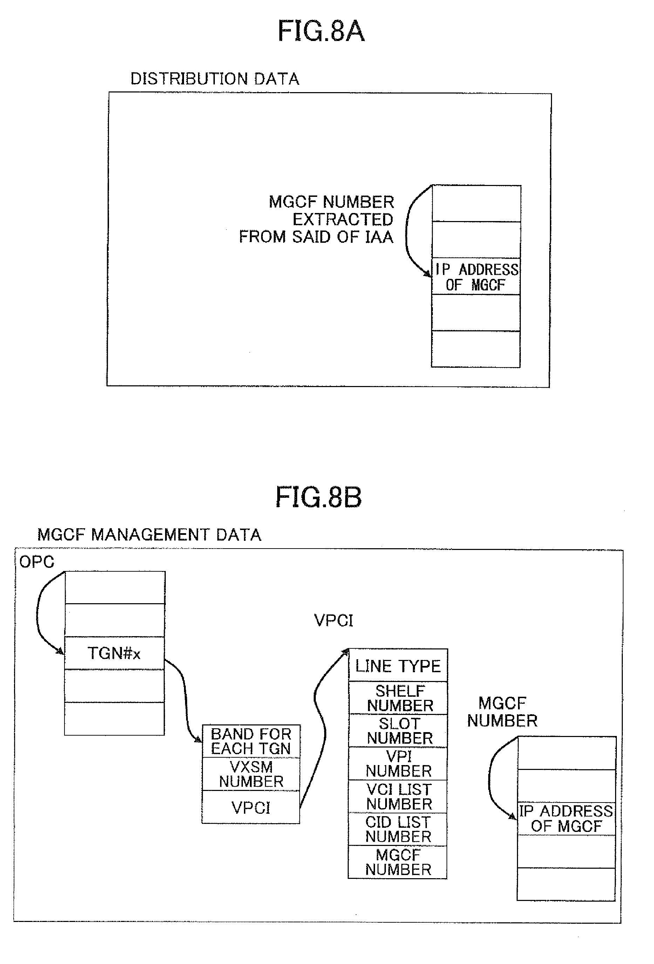

Step S12: The response message (IAA) returned from the CS network 12 is routed to the MGCF 22-0 serving as a requestor via the SGCS 24 and the distribution unit 23. Note that the distribution unit 23 extracts the MGCF number from the transmission source ID (SAID) included in the response message (IAA) and specifies the IP address of the MGCF 22-0 serving as the requestor by referring to distribution data as illustrated in FIG. 8A based on the extracted MGCF number. The distribution data are stored in the distribution data storage unit 23a.

Step S13: The MGCF 22-0 having received the response message (IAA) refers to the MGCF management data that the MGCF 22-0 itself possesses so as to specify which one of the MGCFs controls the line selected.

Note that all the MGCFs 22-0 through 22-2 have the MGCF management data as illustrated in FIG. 8B in a management data storage unit 22b. The MGCF 22-0 obtains a TGN (number assigned to a line (trunk) group on the same destination/route) from the originating station (OPC) contained in the response message (IAA), thus obtaining a VXSM number and VPCI corresponding to the TGN. The MGCF number (and the IP address of the MGCF) obtained from the VPCI specify the MGCF that actually makes the control request. Furthermore, the VXSM number indicates the VXSM corresponding to the line specified by the CS network 12.

Step S14: The MGCF 22-0 transmits the line acquisition command (Add) to the MGCF (e.g., 22-1) specified in the previous step S13 to make the line control request. The line control request is executed by the control request function 22a of each of the MGCFs 22-0 through 22-2.

Step S15: The MGCF 22-1 having received the line control request transmits the line acquisition command (Add) to the VXSM (e.g., 32-1) of the corresponding MGX (e.g., 31-2) in accordance with the instruction requested in the previous step to perform the connection control between the line specified by the CS network 12 and the IP network 11.

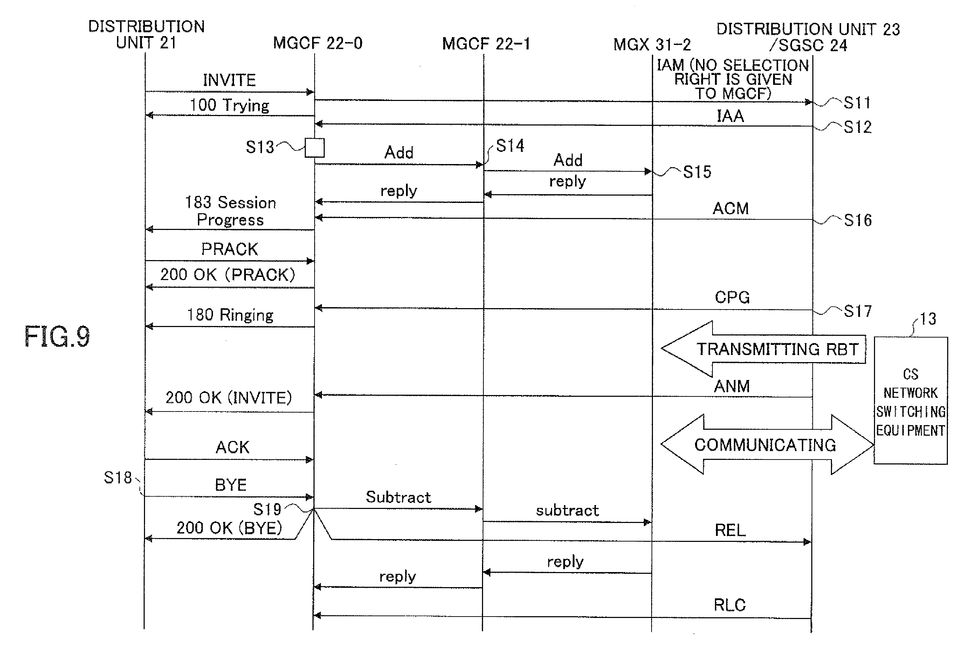

FIG. 9 illustrates the operations sequence of the media gateway device according to the second embodiment of the present invention. Step numbers in FIG. 9 correspond to those in FIG. 7. In FIG. 9, after the connection control in step S15, the address completion message (ACM) is transmitted from the CS network 12 to the MGCF 22-0 in step S16, and then the ring back tone (RBT) is transmitted to the MGCF 22-0 after the issuance of the call elapse message (CPG) in step S17.

When the session completion request message (BYE) is transmitted from the IP network 11 to the MGCF 22-0 in step S18, the MGCF 22-0 transmits the path cut command (Subtract) to the VXSM 32-1 of the MGX 31-2 via the MGCF 22-1 to cut a path, transmits the release message (REL) to the CS network 12, and reports the success of the request (200 OK) to the IP network 11 in step S19.

Therefore, even if the CS network requests the selection of the line other than those capable of being controlled by the MGCF having made the connection request, the MGCF makes the connection request to another MGCF capable of controlling the line requested to be selected. As a result, the occurrence of a lost call can be prevented.

(Third Embodiment)

In a third embodiment, the distribution unit 23 returns the response message (IAA) to the MGCF that controls the line specified by the CS network 12.

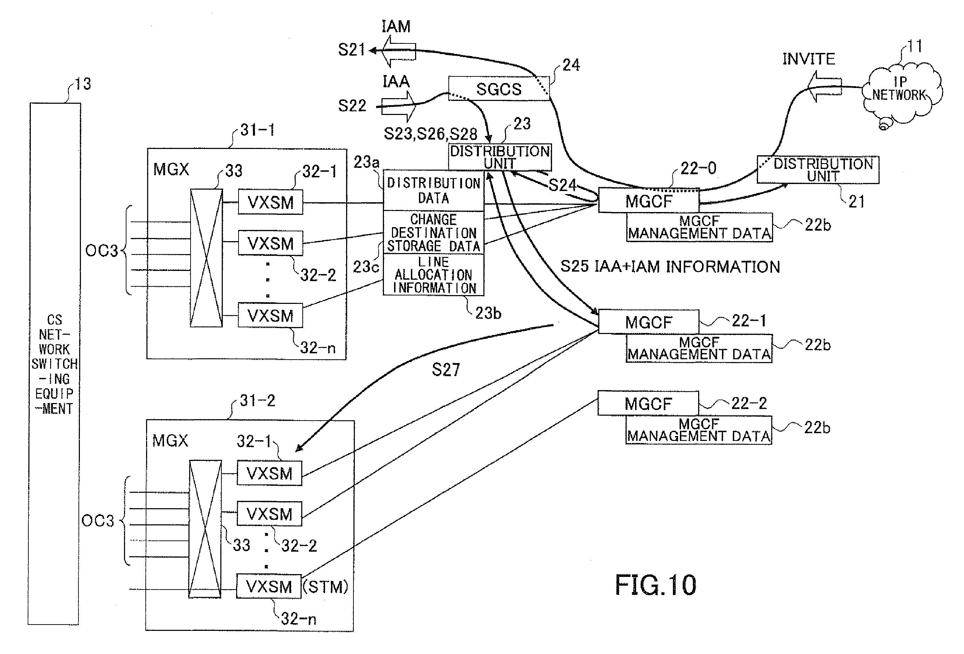

FIG. 10 illustrates the operations explanatory diagram of the media gateway device according to the third embodiment of the present invention.

Step S21: The session start message (INVITE) transmitted from the IP network 11 to the CS network 12 is distributed to the MGCF 22-0 determined based on, for example, the originating station (OPC) contained in the message by the distribution unit 21, converted into the connection request message (IAM) by the MGCF 22-0, and transmitted to the SGCS 24. The above is an example in which the MGCF 22-0 is initially selected by the distribution unit 21.

Step S22: The response message (IAA) returned from the CS network 12 is received by the distribution unit 23 via the SGCS 24.

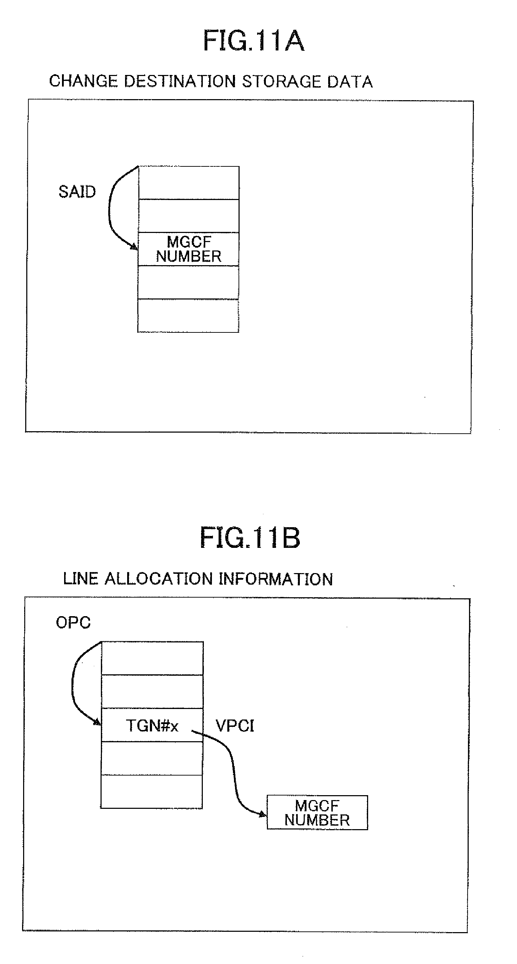

Step S23: The distribution unit 23 analyzes the response message (IAA) to read the line information (OPC, VPCI, and VCI) and specifies the MGCF number (e.g., 22-1) that controls the line by referring to line allocation information as illustrated in FIG. 11B stored in a line allocation information storage unit 23b based on the OPC and the VCI. Note that the line allocation information illustrated in FIG. 11B corresponds to the MGCF management data as illustrated in FIG. 8B.

Step S24: The distribution unit 23 extracts the MGCF number from the transmission source ID (SAID) included in the response message (IAA), specifies the MGCF 22-0 that has initially transmitted the connection request message (IAM) by referring to distribution data as illustrated in FIG. 8A based on the extracted MGCF number, and acquires control information (IAM information) when the connection request message (IAM) is transmitted. The distribution data are stored in the distribution data storage unit 23a.

Step S25: The distribution unit 23 transfers the IAM information acquired in the previous step S24 and the response message (IAA) received in the previous step S22 to the MGCF 22-1 that controls the line specified and selected in the previous step S23.

Step S26: At this time, since the MGCF 22-1 that controls the line specified and selected in step S23 is different from the MGCF 22-0 specified in step S24 that has initially transmitted the connection request message, the distribution unit 23 stores in itself the fact that the MGCF to which the IAM information and the response message (IAA) are to be distributed is changed from the MGCF 22-0 to the MGCF 22-1. This operation is performed in such a manner that the MGCF number of the MGCF to which the IAM information and the response message (IAA) are to be distributed is stored in change destination storage data as illustrated in FIG. 11A stored in a change destination storage unit 23c so as to correspond to the transmission source ID (SAID).

Step S27: The MGCF 22-1 transmits the line acquisition command (Add) to the VXSM (e.g., 32-1) of the corresponding MGX (e.g., 31-2) in accordance with the response message (IAA) and the IAM information received in step S25 to perform the connection control between the line specified by the CS network 12 and the IP network 11.

Note that all the MGCFs 22-0 through 22-2 have the MGCF management data as illustrated in FIG. 8B. The MGCF 22-0 obtains the TGN (number assigned to a line (trunk) group on the same destination/route) from the originating station (OPC) contained in the response message (IAA), thus obtaining the VXSM number and VPCI corresponding to the TGN. The MGCF number (and the IP address of the MGCF) obtained from the VPCI specify the MGCF that actually makes the control request. Furthermore, the VXSM number indicates the VXSM corresponding to the line specified by the CS network 12.

After step S27, the signal in the control plane 20 between the IP network 11 and the CS network 12 is transferred from the IP network 11 to the CS network 12 through the distribution unit 21, the MGCF 22-1, and the distribution unit 23 or transferred in the reverse direction.

Step S28: At the end of the call, the MGCF number stored in the change destination storage data in step S26 is deleted.

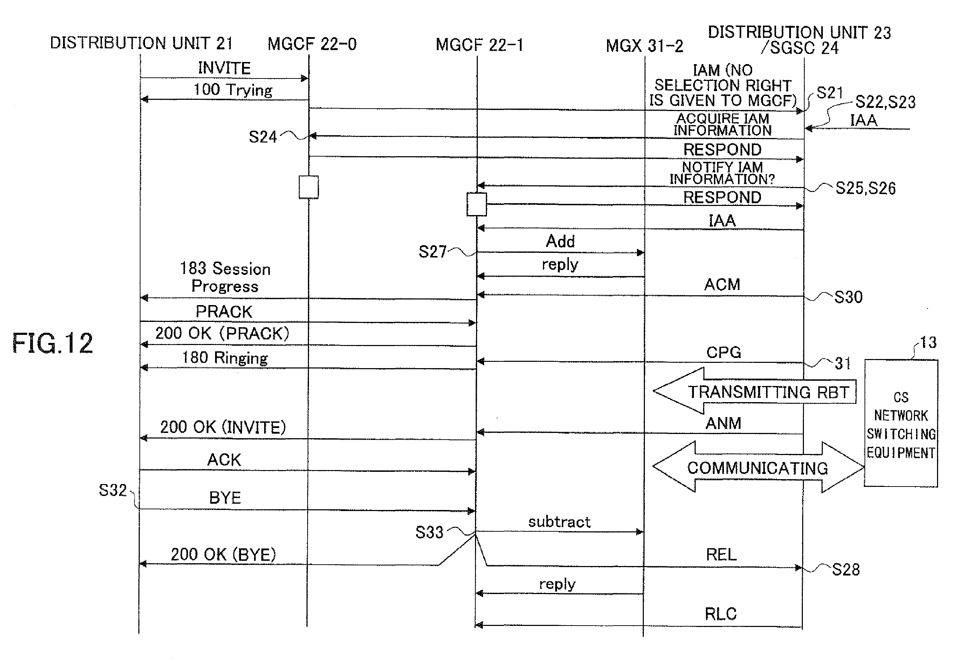

FIG. 12 illustrates the operations sequence of the media gateway device according to the third embodiment of the present invention. Step numbers in FIG. 12 correspond to those in FIG. 10. In FIG. 12, after the connection control in step S27, the address completion message (ACM) is transmitted from the CS network 12 to the MGCF 22-1 in step S30, and then the ring back tone (RBT) is transmitted to the MGCF 22-1 after the issuance of the call elapse message (CPG) in step S31.

When the session completion request message (BYE) is transmitted from the IP network 11 to the MGCF 22-1 in step S32, the MGCF 22-1 transmits the path cut command (Subtract) to the VXSM 32-1 of the MGX 31-2 to cut a path, transmits the release message (REL) to the CS network 12, and reports the success of the request (200 OK) to the IP network 11 in step S33. Furthermore, the MGCF 22-1 transmits the release message (REL) to the distribution unit 23 to delete the MGCF number stored in the change destination storage data in step S28.

Therefore, even if the CS network requests the selection of the line other than those capable of being controlled by the MGCF having made the connection request, the distribution unit 23 makes the connection request to another MGCF capable of controlling the line requested to be selected. As a result, the occurrence of a lost call can be prevented.

(Fourth Embodiment)

In a fourth embodiment, a transmitting-side and receiving-side separating model is applied to the control according to the second embodiment. In other words, all the MGCFs 22-0 through 22-2 have the same MGCF management data that contain data for determining which one of the MGCFs is configured to control which line on the side of the CS network. With the application of the transmitting-side and receiving-side separating model, each of the MGCFs specifies the MGCF that controls the line replied with the response message (IAA) based on the MGCF management data and makes the line control request to the MGCF involved.

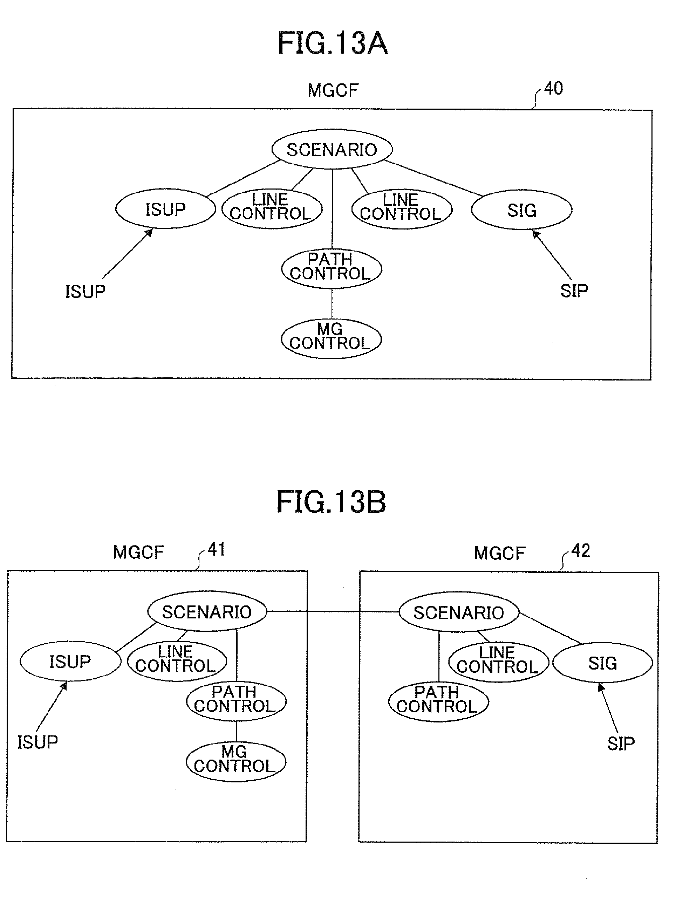

A description is now made of the transmitting-side and receiving-side separating model. As illustrated in FIG. 13A, a general MGCF 40 is composed of the functions of a SIG serving as an object responsible for a signal control function on the side of the IP network, an ISUP on the side of the CS network, a scenario serving as an object responsible for a call connection control scenario function, line control, path control, and MG control.

Conversely, as illustrated in FIG. 13B, the MGCF of the transmitting-side and receiving-side separating model is separated into a MGCF 41 that is composed of the functions of the ISUP, the scenario, the line control, the path control, and the MG control on the side of the CS network and performs the line control on the VXSM and separated into a MGCF 42 that is composed of the functions of the SIG serving as an object responsible for the signal control function, the scenario, the line control, and the path control on the side of the IP network. When a call is transmitted from the CS network to the IP network, the MGCF 41 performs transmitting processing while the MGCF 42 performs receiving processing. On the other hand, when a call is transmitted from the IP network to the CS network, the MGCF 42 performs the transmitting processing while the MGCF 41 performs the receiving processing.

Note that the MG control is the function arranged on the side of the MGCF that performs the receiving processing, and FIG. 13B illustrates an example of arranging the functions when a call is transmitted from the IP network to the CS network. Therefore, in FIG. 13B, the MG control is arranged on the side of the MGCF 41 that performs receiving control. However, when a call is transmitted from the CS network to the IP network, the MG control is arranged on the side of the MGCF 42 that performs receiving-side control.

Next, a description is specifically made of an example of connection in which a call is transmitted from the IP network to the CS network.

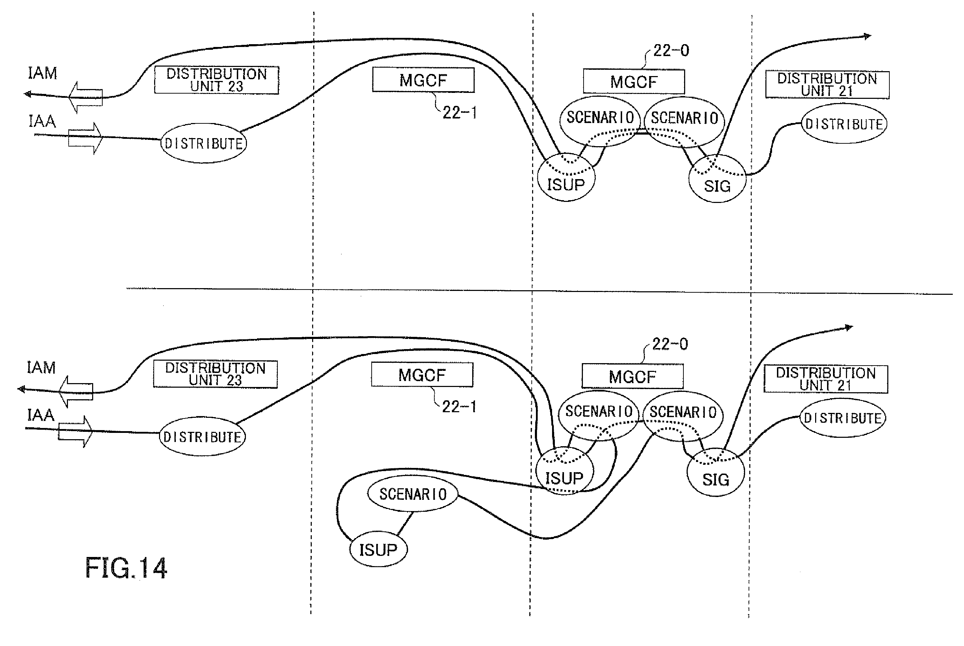

As illustrated in FIG. 14, when the MGCF of the transmitting-side and receiving-side separating model is used, the session start message (INVITE) distributed to the MGCF 22-0 is converted into a connection request message (IAM) after passing through the SIG and the scenario of the transmitting-side MGCF of the MGCF 22-0 and the SIG and the scenario of the receiving-side MGCF of the MGCF 22-0, and then transmitted to the CS network 12 via the distribution unit 23.

Subsequently, if the MGCF that controls the line specified by the response message (IAA) returned from the CS network 12 is identical with the MGCF 22-0 serving as a requestor that has transmitted the IAM, the response message (IAA) is converted after passing through the SIG and the scenario of the receiving-side MGCF of the MGCF 22-0 and the SIG and the scenario of the transmitting-side MGCF of the MGCF 22-0, and then transmitted to the distribution unit 21 as illustrated on an upper column in FIG. 14.

On the other hand, if the MGCF (i.e., 22-1) that controls the line specified by the response message (IAA) returned from the CS network 12 is different from the MGCF 22-0 serving as the requestor that has transmitted the IAM, the response message (IAA) is converted after passing through the SIG and the scenario of the receiving-side MGCF of the MGCF 22-0 and the SIG and the scenario on the transmitting-side MGCF of the MGCF 22-0 via the SIG and the scenario on the receiving-side MGCF of the MGCF-22-1, and then transmitted to the distribution unit 21.

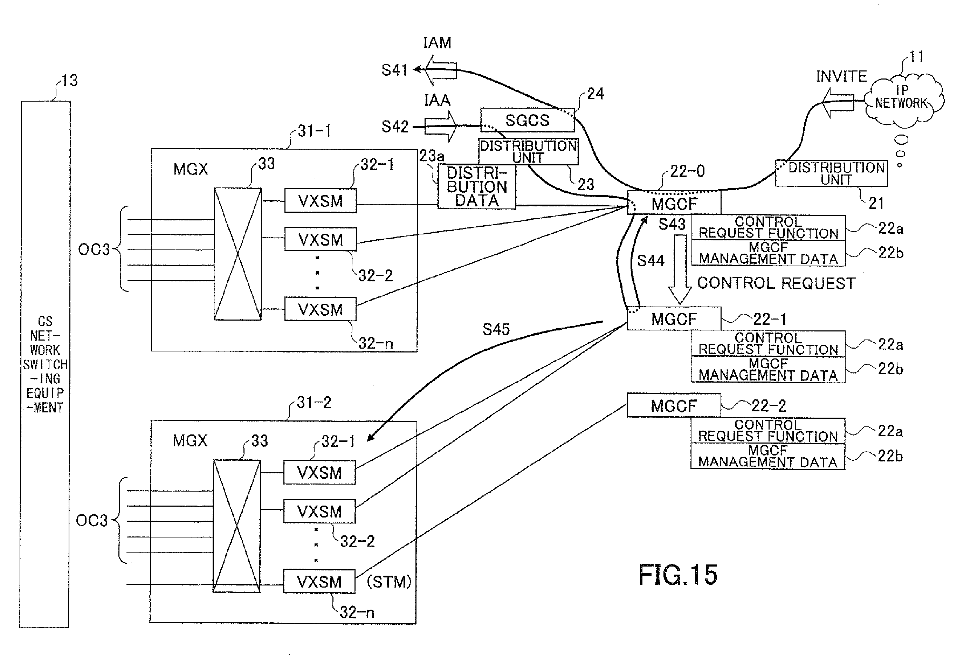

FIG. 15 illustrates the operations explanatory diagram of the media gateway device according to the fourth embodiment of the present invention.

Step S41: The session start message (INVITE) transmitted from the IP network 11 to the CS network 12 is distributed to the MGCF 22-0 determined based on, for example, the originating station (OPC) contained in the message by the distribution unit 21, converted into the connection request message (IAM) by the MGCF 22-0, and transmitted to the SGCS 24. The above is an example in which the MGCF 22-0 is initially selected by the distribution unit 21.

Step S42: The response message (IAA) returned from the CS network 12 is routed to the MGCF 22-0 serving as a requestor via the SGCS 24 and the distribution unit 23. Note that the distribution unit 23 extracts the MGCF number from the transmission source ID (SAID) included in the response message (IAA) and specifies the IP address of the MGCF 22-0 serving as the requestor by referring to the distribution data as illustrated in FIG. 8A based on the extracted MGCF number. The distribution data are stored in the distribution data storage unit 23a.

Step S43: The MGCF 22-0 having received the response message (IAA) refers to the MGCF management data that the MGCF 22-0 itself possesses so as to specify which one of the MGCFs controls the line selected.

Note that all the MGCFs 22-0 through 22-2 have the MGCF management data as illustrated in FIG. 8B in the management data storage unit 22b. The MGCF 22-0 obtains the TGN (number assigned to a line (trunk) group on the same destination/route) from the originating station (OPC) contained in the response message (IAA), thus obtaining the VXSM number and VPCI corresponding to the TGN. The MGCF number (and the IP address of the MGCF) obtained from the VPCI specify the MGCF that actually makes the control request. Furthermore, the VXSM number indicates the VXSM corresponding to the line specified by the CS network 12.

Step S44: The MGCF 22-0 transfers the response message (IAA) to the MGCF (e.g., 22-1) specified in the previous step S43 to make a receiving processing request to the MGCF 22-1. The receiving processing request is executed by the control request function 22a of each of the MGCFs 22-0 through 22-2.

Step S45: The MGCF 22-1 having received the receiving processing request transmits the line acquisition command (Add) to the VXSM (e.g., 32-1) of the corresponding MGX (e.g., 31-2) in accordance with the instruction requested in the previous step to perform the connection control between the line specified by the CS network 12 and the IP network 11.

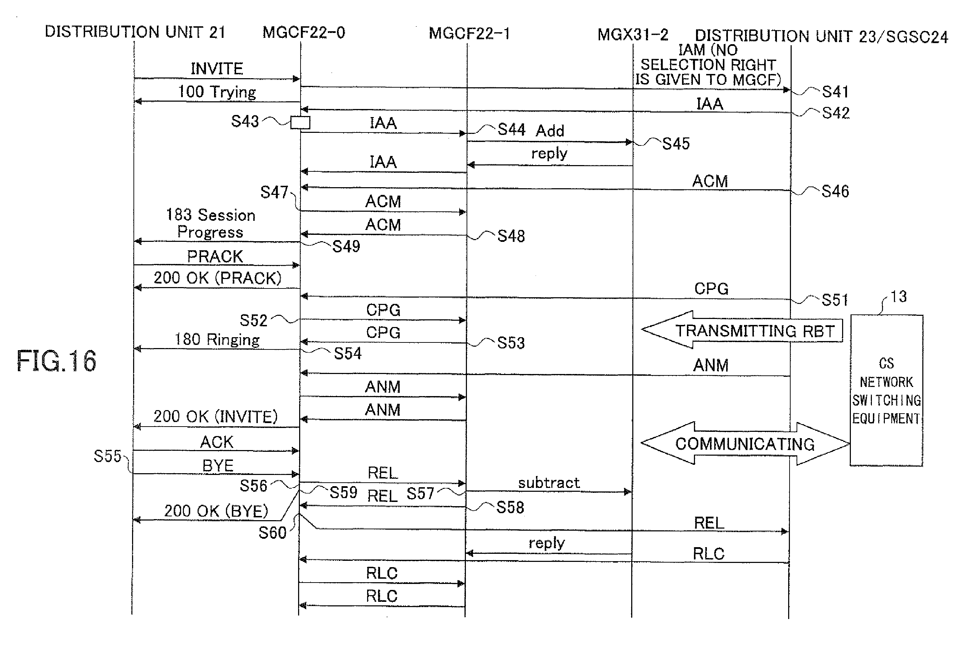

FIG. 16 illustrates the operations sequence of the media gateway device according to the fourth embodiment of the present invention. Step numbers in FIG. 16 corresponds to those in FIG. 15. In FIG. 15, after the connection control in step S45, when the address completion message (ACM) is transmitted from the CS network 12 to the MGCF 22-0 in step S46, the address completion message (ACM) is transmitted from the SIG and the scenario of the receiving-side MGCF of the MGCF 22-0 to the SIG and the scenario of the receiving-side MGCF of the MGCF 22-1 in step S47. In step S48, the address completion message (ACM) is next transmitted from the SIG and the scenario of the receiving-side MGCF of the MGCF 22-1 to the SIG and the scenario of the transmitting-side MGCF of the MGCF 22-0. Then, in step S49, a session progress status notification message (183 Session Progress) is transmitted to the IP network 11.

Furthermore, in step S51, after the issuance of the call elapse message (CPG) from the CS network 12 to the MGCF 22-0, the ring back tone (RBT) is transmitted to the MGCF 22-0. In step S52, the call elapse message (CPG) is transmitted from the SIG and the scenario of the receiving-side MGCF of the MGCF 22-0 to the SIG and the scenario of the receiving-side MGCF of the MGCF 22-1. In step S53, the call elapse message (CPG) is further transmitted from the SIG and the scenario of the receiving-side MGCF of the MGCF 22-1 to the SIG and the scenario of the transmitting-side MGCF of the MGCF 22-0. In step S54, the session progress status notification message (183 Session Progress) is transmitted to the IP network 11.

When the session completion request message (BYE) is transmitted from the IP network 11 to the MGCF 22-0 in step S55, the MGCF 22-0 transmits the release message (REL) to the MGCF 22-1 in step S56 while the MGCF 22-1 transmits the path cut command (Subtract) to the VXSM 32-1 of the MGX 31-2 to cut a path. Furthermore, the MGCF 22-1 transmits the release message (REL) to the MGCF 22-0 in step S58, and the MGCF 22-0 reports the success of the request (200 OK) to the IP network 11 in step S59 and transmits the release message (REL) to the CS network 12 in step S60.

According to this embodiment, even if the CS network requests the selection of the line other than those capable of being controlled by the MGCF having made the connection request, the MGCF makes the connection request to another MGCF capable of controlling the line requested to be selected. As a result, the occurrence of a lost call can be prevented. Moreover, the configuration of each of the MGCFs 22-0 through 22-2 can be simplified by separating the transmitting side and the receiving side from each other.

Note that in this embodiment, the transmitting-side and receiving-side separating model is applied to the control according to the second embodiment. However, it may also be applied to the control according to the first (or the third) embodiment. In this case, the MGCF that initially receives the message is responsible for the transmitting processing, while the master MGCF (or the MGCF that receives the response message from the distribution unit 23) is responsible for the receiving processing.

In the embodiments described above, each of the MGCFs 22-0 through 22-2 is used as an example of call control means; each of the VXSMs 32-1 through 32-n is used as an example of an interconnection unit interconnection means; the management data storage unit 22b is used as an example of a management data storage unit management data storage means; the control request function 22a is used as an example of a control request unit control request means; the line allocation information storage unit 23b is used as an example of a line allocation information storage unit line allocation information storage means; the distribution unit 23 is used as an example of distribution means; the transmitting-side MGCF 42 is used as an example of transmitting-side processing means; the receiving-side MGCF 41 is used as an example of receiving-side processing means; the change destination storage unit 23c is used as an example of change destination storage means; and the distribution data storage unit 23a is used as an example of distribution data storage means.

## Claims

1. A media gateway device that has plural call control means for performing call control between the Internet and a public network and plural interconnection means for performing line connection and media conversion of user data between the Internet and the public network and interconnects the Internet and the public network,
wherein
the media gateway device sets specific call control means for performing line connection control of the plural interconnection means and includes plural call control means other than the specific call control means, the plural call control units requesting the specific call control means to perform line connection control of the plural interconnection means,
the specific call control means has management data storage means for storing management data for determining which one of the plural interconnection means controls which line of the public network, and
each of the plural call control means other than the specific call control means has control request means for requesting the specific call control means to perform the line connection control of the plural interconnection means.

2. A media gateway device that has plural call control means for performing call control between the Internet and a public network and plural interconnection means for performing line connection and media conversion of user data between the Internet and the public network and interconnects the Internet and the public network,
wherein
the plural call control means include
management data storage means for storing management data for determining which one of the plural interconnection means controls which line of the public network and
control request means for determining which one of the plural call control means controls a line instructed by the public network to be connected by using the management data storage means and requesting the determined call control means to perform line connection control of the plural interconnection means.

3. A media gateway device that has plural call control means for performing call control between the Internet and a public network and plural interconnection means for performing line connection and media conversion of user data between the Internet and the public network and interconnects the Internet and the public network,
wherein
the media gateway device comprises
line allocation information storage means for storing line allocation information that indicates which one of the plural interconnection means controls which line of the public network and
distribution means for distributing a message that instructs line connection from the public network to call control means based on the line allocation information, and
the call control means, which receives from the distribution means the message that instructs the line connection from the public network, performs line connection control of the plural interconnection means.

4. The media gateway device according to any one of claims 1 through 3, wherein
each of the plural call control means is separated into transmitting-side processing means for processing a call transmitted from the Internet and receiving-side control means for processing a call received from the public network and performing line connection control of the plural interconnection means.

5. The media gateway device according to claim 3, comprising:
change destination storage means for storing as an item to be changed information of the call control means to which the distribution means distributes the message that instructs the line connection from the public network if the call control means to which the distribution means distributes the message that instructs the line connection from the public network is different from the call control means that initially transmits from the Internet a message as an original of the message.

6. The media gateway device according to claim 5, comprising:
distribution data storage means for storing as distribution data the call control means indicated by a transmission source identifier included in the message that instructs the line connection from the public network,
wherein
the distribution data storage means is used for retrieving the call control means that initially transmits from the Internet the message as the original of the message.

7. The media gateway device according to claim 1 or 2, comprising:
distribution data storage means for storing as distribution data the call control means indicated by a transmission source identifier included in a message that instructs the line connection from the public network; and
distribution means for distributing the message that instructs line connection from the public network to the call control means based on line allocation information, wherein
the message from the Internet as an original of the message is transmitted to the call control means determined by the distribution data storage means.
